# EUROPÄISCHE PATENTSCHRIFT

(11) **EP 3 731 187 B1**
(45) Veröffentlichungstag und Bekanntmachung des Hinweises auf die Patenterteilung: **07.06.2023**
(21) Anmeldenummer: 20169501.2
(22) Anmeldetag: 14.04.2020
(51) Int. Cl.: G06T 7/73

(54) **VERFAHREN UND VORRICHTUNG ZUR BESTIMMUNG DER GEOGRAFISCHEN POSITION UND ORIENTIERUNG EINES FAHRZEUGS**
METHOD AND DEVICE FOR DETERMINING THE GEOGRAPHICAL POSITION AND ORIENTATION OF A VEHICLE
PROCÉDÉ ET DISPOSITIF DE DÉTERMINATION DE LA POSITION GÉOGRAPHIQUE ET DE L'ORIENTATION D'UN VÉHICULE

(30) Priorität: 26.04.2019 DE 102019206036
(43) Veröffentlichungstag der Anmeldung: 28.10.2020
(73) Patentinhaber: VOLKSWAGEN AG, 38440 Wolfsburg (DE)
(72) Erfinder: Schomerus, Volker Patricio, 38100 Braunschweig (DE)

(56) Entgegenhaltungen:
- KR-B1- 101 880 185
- HAOHAO HU ET AL: "Accurate Global Trajectory Alignment using Poles and Road Markings", ARXIV.ORG, CORNELL UNIVERSITY LIBRARY, 201 OLIN LIBRARY CORNELL UNIVERSITY ITHACA, NY 14853, 25. März 2019 (2019-03-25), XP081157525,

## Beschreibung

Die vorliegende Erfindung betrifft ein Verfahren zur Bestimmung der geografischen Position und Orientierung eines Fahrzeugs, das insbesondere zur Eigenlokalisierung von autonom oder teilautonom fahrenden Fahrzeugen angewendet werden kann. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

Eine präzise und robuste Eigenlokalisierung ist eine der Voraussetzungen für das autonome Fahren von Fahrzeugen im Straßenverkehr. Weit verbreitet für die Positionsbestimmung und Navigation im automobilen Bereich sind globale Satellitennavigationssysteme wie beispielsweise das GPS-System. Neben den Schwierigkeiten bei schlechten Empfangsbedingungen, beispielsweise in urbanen Gebieten oder bei starkem Schneefall, reicht aber auch die Genauigkeit nicht für sicherheitsrelevante Anwendungen aus.

Die Genauigkeit der GPS-basierten Lokalisierung kann zwar durch Verfahren wie DGPS, bei dem Korrektursignale üblicherweise über Funk an die DGPS-Empfänger übermittelt werden, deutlich verbessert wurden. Aber dennoch ist auch damit kein sicheres autonomes Fahren möglich. So können einerseits auf Funk basierende Systeme durch Funkstörungen ausfallen, oder durch eine, ggfs. sogar unangekündigte, Verschlüsselung durch den Betreiber nicht auswertbar sein, so dass dann keine zuverlässige Positionsmessung mit der ausreichenden Genauigkeit möglich ist.

Außerdem liegt bei einer satellitengestützten Positionsbestimmung, zumindest ohne Hinzunahme weiterer Sensordaten, keine Information über die Ausrichtung bzw. Orientierung des Fahrzeugs vor. Diese kann nur mittelbar durch Differenzbildung vergangener, aufeinanderfolgender Positionen berechnet werden.

Um bei einer Positionsbestimmung auch die Orientierung des Fahrzeugs zu bestimmen, sind verschiedene Lösungen bekannt, bei denen eine sensorische Erfassung des Fahrzeugumfelds, beispielsweise mit einer Kamera oder einem LIDAR-Sensor (Abkürzung für Englisch; "light detection and ranging"), erfolgt.

So kann mittels einer kamerabasierten Lokalisierung über bestimmte Landmarken, die in einer digitalen Karte eingetragen sind und im Kamerabild detektiert werden, eine 2D-Koordinate in der Kartenebene und auch die Orientierung des Fahrzeugs in dieser Ebene ermittelt werden. Dieses erfordert jedoch, dass eine ausreichende Anzahl von geeigneten Landmarken in der digitalen Karte eingetragen sein müssen, die auch bei jedem Wetter zu jeder Jahreszeit detektiert werden können.

Ebenso gibt es Ansätze für eine lidarbasierte Lokalisierung. LIDAR-Sensoren liefern unabhängig von den Lichtverhältnissen in der Fahrzeugumgebung eine Punktwolke mit zentimetergenauen 3D-Raumkoordinaten für die erfassten Objekte. In Verbindung mit einer digitalen Karte aus 3D-Punkten können diese Messpunkte für die Positionsbestimmung verwendet werden. Für die Lokalisierung des Fahrzeugs wird dabei die aktuell gemessene Lidar-Punktwolke in die digitale Karte gematcht, das heißt, möglichst exakt mit den 3D-Punkten in der Karte in Übereinstimmung gebracht. Ein Nachteil einer solchen lidarbasierte Lokalisierung ist aber, dass der Aufbau einer hierfür erforderlichen exakten 3D-Karte sehr aufwändig ist.

Eine lidarbasierte Lokalisierung basierend auf der Erfassung von Landmarken wird in der WO 2018/140701 A1 beschrieben. Hierbei werden zusätzlich Daten von einer Kamera den 3D-Punkten zugeordnet. Auch in der US 2017/0248963 A1 und der US 2018/0136644 A1 werden Daten von verschiedenen Sensoren zentral gesammelt um eine Bahnplanung für autonom fahrende Fahrzeuge durchzuführen. Dabei wird auch ein Lokalisierer eingesetzt, der die Daten der verschiedenen Sensoren analysiert und durch Vergleichen der Sensordaten mit Kartendaten die Pose eines autonomen Fahrzeugs zu bestimmen.

Weiterhin offenbart die WO 2018/104563 A2 zur Bestimmung der Position und Orientierung eines Fahrzeugs das Fahrzeugumfeld mit einer oder mehreren Kameras zu erfassen. Um Bereiche zu finden, in denen sich Landmarken befinden, die durch Vergleich mit einer Referenzkarte zur Lokalisierung verwendet werden können, wird hierbei eine semantische Segmentierung der mit den Kameras erfassten Bilder durchgeführt. Dabei werden für Objektklassen wie z.B. Gebäude oder Verkehrszeichen in Verbindung mit einer Tiefenmessung 3D-Landmarken generiert. Auch ein Tracking solcher Landmarken über mehrere Frames wird vorgeschlagen.

Die KR 101 880 185 B1 offenbart ein Posenschätzverfahren für ein sich bewegendes Objekt unter Verwendung eines Bildes, das mit einer Kameras erfasst wird, und einer als Referenz dienenden semantischen Karte. Basierend auf einer anfänglichen Poseninformation in der semantischen Karte wird ein semantischer Vergleichsbereich ausgewählt und mit Bildanalyseinformationen des erfassten Kamerabildes verglichen, um die Pose des sich bewegenden Objekts abzuschätzen. Für die semantische Karte, den semantischen Vergleichsbereich und die Bildanalyseinformationen sind verschiedene Klassen vorgesehen, wie Straßenbereiche und Bereiche, die nicht einer Straße entsprechen.

Schließlich wird in HAOHAO HU ET AL, "Accurate Global Trajectory Alignment using Poles and Road Markings", ARXIV.ORG, CORNELL UNIVERSITY LIBRARY, 201 OLIN LIBRARY CORNELL UNIVERSITY ITHACA, NY 14853, 25. März 2019, XP081157525 ein Georeferenzierungsansatz beschrieben, bei dem Trajektorien mithilfe von erkannten Masten und Straßenmarkierungen an Luftbildern ausgerichtet werden. Hierbei werden die erkannten Straßenmarkierungen in verschiedene Klassen eingeteilt und zusätzlich Straßengrenzen für die seitliche Ausrichtung verwendet.

Es ist eine Aufgabe der Erfindung, ein verbessertes Verfahren und eine verbesserte Vorrichtung zur Bestimmung der geografischen Position und Orientierung eines Fahrzeugs zur Verfügung zu stellen.

Diese Aufgabe wird durch ein Verfahren mit den Merkmalen des Anspruchs 1 sowie durch eine entsprechende Vorrichtung gemäß Anspruch 12 gelöst. Bevorzugte Ausgestaltungen der Erfindung sind Gegenstand der abhängigen Ansprüche.

Bei dem erfindungsgemäßen Verfahren zur Bestimmung der geografischen Position und Orientierung eines Fahrzeugs
- wird mit mindestens einer Kamera des Fahrzeugs ein Bild des Fahrzeugumfelds erfasst, wobei das erfasste Bild zumindest teilweise Bereiche des Fahrzeugumfelds auf Bodenniveau umfasst;
- wird für die einzelnen Pixel des erfassten Bildes jeweils eine Klassifizierungsinformation generiert, die eine Zuordnung zu einer von mehreren vorgegebenen Objektklassen angibt, wobei basierend auf dieser Zuordnung eine semantische Segmentierung des Bildes erfolgt;
- werden Bodentexturübergänge, also Übergänge zu anderen Objektklassen auf der Bodenebene, basierend auf der semantischen Segmentierung des Bildes detektiert;
- werden nur die Pixel der detektierten Bodentexturübergänge auf das Bodenniveau des Fahrzeugumfelds projiziert;
- wird die Abweichung zwischen den auf das Bodenniveau des Fahrzeugumfelds projizierten Bodentexturübergängen und Bodentexturübergängen in einer globalen Referenzkarte minimiert; und
- wird basierend auf der minimierten Abweichung die aktuelle Position und Orientierung des Fahrzeugs im Raum ausgegeben.

Auf diese Weise ist mit geringem Aufwand eine 6D-Lokalisierung, das heißt eine Bestimmung der sechs Freiheitsgrade (englisch: "six degrees of freedom", 6DoF) im dreidimensionalen Raum, vorzunehmen. Es werden somit für das Fahrzeug sowohl die aktuellen Raumkoordinaten als auch eine Links- bzw. Rechtsdrehung (Gieren), ein seitliches Verkippen (Rollen), oder ein Vor- bzw. Zurückkippen (Nicken) erfasst. Weil für die 6D-Lokalisierung ausschließlich Bodentexturübergänge verwendet und damit keine Tiefeninformation benötigt werden, ist es nicht nötig, Landmarken mit 3D-Positionen zu erfassen oder zu tracken. Weiterhin muss die verwendete Referenzkarte keinerlei 3D-Informationen für die Landmarken enthalten. Damit werden die Anforderungen bezüglich Rechenzeit und Speicherbedarf gegenüber bekannten Verfahren deutlich reduziert.

Gemäß einer Ausführungsform der Erfindung werden hierbei ausgehend von einer Schätzung der aktuellen Position und Orientierung des Fahrzeugs und/oder einer initialen Kalibrierung der mindestens einen Kamera anfängliche Transformationsparameter zwischen den detektierten Bodentexturübergängen und den Bodentexturübergängen für die geschätzte Position und Orientierung in der globalen Referenzkarte bestimmt.

Basierend auf den Transformationsparametern werden die detektierten Bodentexturübergänge auf das Bodenniveau des Fahrzeugumfelds projiziert.

Hierfür wird ein Optimierungsmaß für die Abweichung berechnet und mit einem Schwellwert für eine akzeptable Abweichung verglichen. Die Transformationsparameter werden verändert, falls der Schwellwert nicht unterschritten ist und dieser Prozess iterativ fortgesetzt bis der Schwellwert unterschritten wird.

Vorzugsweise wird hierbei basierend auf der Schätzung der aktuellen Position und Orientierung des Fahrzeugs und/oder der initialen Kalibrierung der mindestens einen Kamera ein Teilausschnitt aus der globalen Referenzkarte mit Bodentexturübergängen ausgewählt und die Abweichung zwischen den auf das Bodenniveau des Fahrzeugumfelds projizierten Bodentexturübergängen und Bodentexturübergängen in dem ausgewählten Teilausschnitt der globalen Referenzkarte minimiert.

Hierbei kann die Schätzung der aktuellen Position mittels Satellitennavigation und die Orientierung des Fahrzeugs mittels eines elektronischen Kompass ermittelt werden.

Stattdessen oder zusätzlich kann die Schätzung der aktuellen Position und Orientierung des Fahrzeugs basierend auf einer bekannten vorherigen Position und Orientierung des Fahrzeugs mittels odometrischer Messverfahren ermittelt werden.

Die Bodentexturübergänge können hierbei insbesondere auf einer unterschiedlichen Beschaffenheit der Oberfläche von unterschiedlichen Bereichen des Fahrzeugumfelds auf Bodenniveau beruhen.

Weiterhin gibt die globale Referenzkarte vorteilhafterweise aus der Vogelperspektive eine generalisierte Darstellung von Straßen und an die Straßen angrenzenden geografischen Details wieder.

Gemäß einer Ausführungsform der Erfindung ist die generalisierte Darstellung in Form eines Distanzfeldes ausgestaltet, welches jeweils für einen Punkt der Referenzkarte einer ersten Objektklasse den Abstand zu dem nächstliegenden Punkt einer zweiten Objektklasse angibt.

Gemäß einer weiteren Ausführungsform der Erfindung sind hierbei mehrere verschiedene Arten von Bodentexturübergängen je nach den Objektklassen der benachbarten Bereiche des Fahrzeugumfelds vorgesehen, wobei für die verschiedenen Arten von Bodentexturübergängen jeweils separat die Abweichung zwischen den auf das Bodenniveau des Fahrzeugumfelds projizierten Bodentexturübergängen und Bodentexturübergängen in der globalen Referenzkarte minimiert wird und die sich ergebenden Ergebnisse zur Ermittlung der Parameter für die aktuelle Position und Orientierung des Fahrzeugs zusammengeführt werden.

Gemäß einer weiteren Ausführungsform der Erfindung wird im Bereich der Bodentexturübergänge zusätzlich für die Pixel des mit der mindestens einen Kamera erfassten Bildes eine Höheninformation sensorisch erfasst, wobei für die einzelnen Punkte der globalen Referenzkarte ebenfalls Höheninformationen vorliegen und wobei die Pixel des erfassten Bildes und die Punkte der globalen Referenzkarte möglichst gut miteinander in Deckung gebracht werden.

Vorzugsweise wird hierbei die Klassifizierungsinformation für die einzelnen Pixel mit einem künstlichen neuronalen Netzwerk generiert.

Entsprechend umfasst eine erfindungsgemäße Vorrichtung zur Bestimmung der geografischen Position und Orientierung eines Fahrzeugs mindestens eine Kamera zur Erfassung eines Bildes vom Fahrzeugumfeld des Fahrzeugs, wobei die mindestens eine Kamera so in einem Fahrzeug anordbar ist, dass das erfasste Bild zumindest teilweise Bereiche des Fahrzeugumfelds auf Bodenniveau umfasst, und eine Verarbeitungseinheit, die
- für die einzelnen Pixel des erfassten Bildes jeweils eine Klassifizierungsinformation generiert, die eine Zuordnung zu einer von mehreren vorgegebenen Objektklassen angibt, und basierend auf dieser Zuordnung eine semantische Segmentierung des Bildes durchführt;
- Bodentexturübergänge, also Übergänge zu anderen Objektklassen auf der Bodenebene, basierend auf der semantischen Segmentierung des Bildes detektiert;
- nur die Pixel der detektierten Bodentexturübergänge auf das Bodenniveau des Fahrzeugumfelds projiziert;
- die Abweichung zwischen den auf das Bodenniveau des Fahrzeugumfelds projizierten Bodentexturübergängen und Bodentexturübergängen in einer globalen Referenzkarte minimiert; und
- basierend auf der minimierten Abweichung die aktuelle Position und Orientierung des Fahrzeugs im Raum ausgibt.

Gemäß einer weiteren Ausführungsform der Erfindung ist hierbei ein 3D-Sensor vorgesehen, der im Bereich der Bodentexturübergänge zusätzlich für die Pixel des mit der mindestens einen Kamera erfassten Bildes eine Höheninformation generiert.

Vorzugsweise ist hierbei der 3D-Sensor als Lidarsensor ausgestaltet.

Die Erfindung betrifft auch ein Kraftfahrzeug, in dem das erfindungsgemäße Verfahren oder die erfindungsgemäße Vorrichtung eingesetzt wird.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm eines erfindungsgemäßen Verfahrens;
- Fig. 2: zeigt schematisch an einem Beispiel die Projektion von Kamerapixel auf die Bodenebene basierend auf den Kamerakalibrierungsparametern und der geschätzten Fahrzeugpose;
- Fig. 3: zeigt schematisch an einem Beispiel eine Luftbildaufnahme eines Kreuzungsbereiches (A), Bodentexturübergänge für diesen Kreuzungsbereich (B) und ein Distanzfeld für diesen Kreuzungsbereich (C);
- Fig. 4: zeigt schematisch ein mit einer Kamera aufgenommenes Bild eines Kreuzungsbereiches (A), die Zuordnung der Pixel dieses Bildes zu einer von mehreren Objektklassen (B), die Projektion der klassifizierten Pixel auf die Bodenebene (C) mit den sich daraus ergebenden Bodentexturübergängen (D);
- Fig. 5: zeigt für das Beispiel aus Fig. 3 nochmals die sich aus der Projektion der klassifizierten Pixel auf die Bodenebene ergebenden Bodentexturübergänge (A), diese Bodentexturübergänge in einem Distanzfeld basierend auf einer Schätzung der Position und Orientierung des Fahrzeugs (B), sowie die entsprechende Projektion der Bodentexturübergänge auf die Referenzkarte (C); und
- Fig. 6: zeigt schematisch ein Kraftfahrzeug mit einer erfindungsgemäßen Vorrichtung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

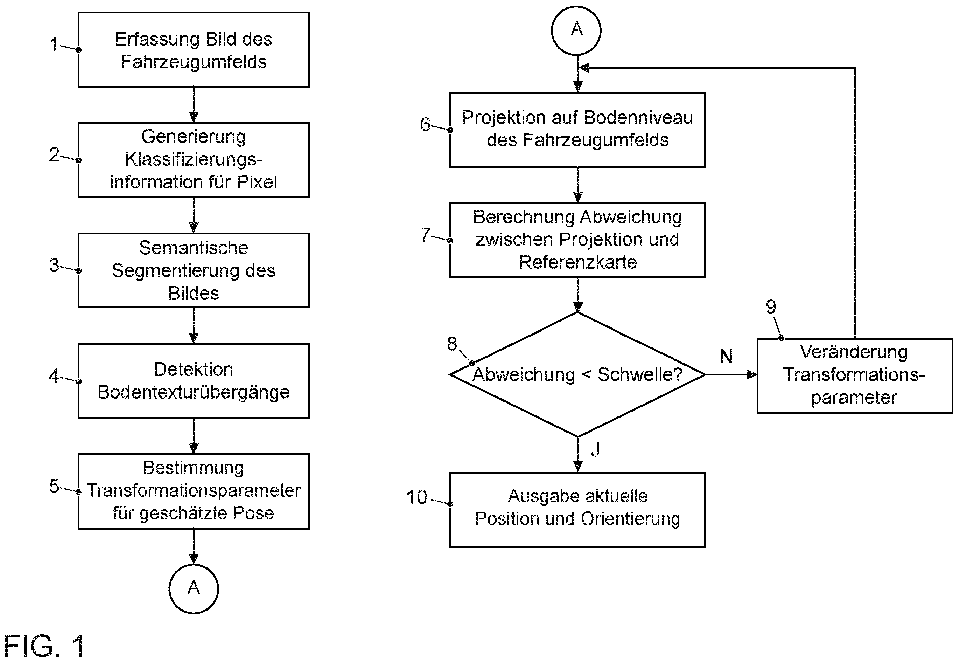

Figur 1 zeigt schematisch ein Ablaufdiagramm eines erfindungsgemäßen Verfahren zur Bestimmung der geografischen Position und Orientierung eines Fahrzeugs, das insbesondere zur Eigenlokalisierung von autonom oder teilautonom fahrenden Fahrzeugen angewendet werden kann. Die folgenden Erläuterungen beziehen sich hierbei auf ein einzelnes Bild, üblicherweise wird dieses aber Teil einer Bildfolge bzw. Videosequenz sein.

Gemäß Verfahrensschritt 1 wird zunächst mit einem Bildsensor, der in einer Kamera integriert sein kann, ein Bild mit einer Vielzahl von Pixel erfasst. Hierbei kann das Bild insbesondere als Farbbild vorliegen, beispielsweise als RGB-Signal, bei dem für die einzelnen Pixel jeweils für die drei Grundfarben Rot, Grün und Blau Farbwerte vorliegen. Ebenso kann das Bild als Grauwertbild vorliegen, wobei dann für die einzelnen Pixel jeweils ein Grauwert existiert. Durch den Bildsensor kann hierbei insbesondere sichtbares Licht, stattdessen oder zusätzlich aber auch infrarotes Licht erfasst werden. Über die Ausrichtung des Bildsensors bzw. der Kamera sind die Pixel hierbei einem Bildsensor- bzw. Kamerakoordinatensystem zugeordnet.

Im darauffolgenden Verfahrensschritt 2 wird mittels eines neuronalen Netzwerks für jeden Pixel eine Klassifizierungsinformation generiert, die eine Zuordnung zu einer von mehreren vorgegebenen Objektklassen angibt. Bei dem neuronalen Netzwerk 12 kann es sich hier insbesondere um ein sogenanntes "Convolutional Neural Network" handeln, bei dem die Neuronen in einem oder mehreren "Convolutional Layer" angeordnet sind und die Aktivität der Neuronen über eine diskrete Faltung berechnet wird. Üblicherweise werden die Convolutional Layer hierbei von einem "Pooling Layer" gefolgt, in dem überflüssige Informationen verworfen werden.

Darauf basierend wird in Verfahrensschritt 3 durch eine semantische Segmentierung, das sogenannte "Semantische Pixel Labeling", das erfasste Bild in verschiedene Segmente unterteilt, wie beispielsweise Bereiche der Objektklassen "Fahrbahn", "Auto", "Fußgänger", "Verkehrszeichen", "Gebäude", "Randbegrünung" oder "Himmel". Da das Semantische Pixel Labeling häufig auch in anderen Modulen des Automatischen Fahrens verwendet wird, kann in solchen Fällen das Ergebnis sowohl für der erfindungsgemäße Posenbestimmung als auch für die genannten anderen Module gemeinsam verwendet werden, so dass dann nur ein geringer zusätzlicher Rechenaufwand entsteht.

Im Verfahrensschritt 4 werden die Segmente ermittelt, die sich auf Bodenniveau befinden, wie beispielsweise Fahrbahnflächen, benachbarte Randflächen wie Parkplätze, Bürgersteige/Gehwege oder Grünflächen, Fahrbahnmarkierung z.B. zur Abgrenzung mehrerer Fahrbahnen voneinander oder zur Kenntlichmachung von Fußgängerüberwegen, Bordsteine zur Abgrenzung verschiedener Bereiche der Straße voneinander und zur Befestigung von Grünstreifen und des Fahrbahn- oder Wegrandes, oder Straßenabläufe zur Straßenentwässerung. Für diese Segmente werden dann Texturübergänge, das heißt, Übergänge zu anderen Objektklassen auf der Bodenebene ermittelt. So werden z. B. die Pixel ermittelt, die sich an der Grenze zwischen einem Bordstein-Segment und einem Fahrbahn-Segment befinden. Alle dynamischen Objekte, sowie statische Objekte, die sich nicht auf der Bodenebene befinden und deshalb eine Projektion des Kamerabildes auf die Bodenebene verfälschen würden, werden für das Matching nicht verwendet.

Ausgehend von einer Schätzung der aktuellen Position und Orientierung des Fahrzeugs und einer initialen Kalibrierung des Bildsensors bzw. der Kamera werden dann in Verfahrensschritt 5 anfängliche Transformationsparameter für eine auf Rotation und Translation beruhende Transformation ^{C}T_{G} bestimmt, durch die die detektierten Bodentexturübergänge und Bodentexturübergänge für die geschätzte Position und Orientierung in einer globalen Referenzkarte näherungsweises in Deckung gebracht werden können. Die Transformationsparameter können hierbei insbesondere durch die drei kartesischen (translatorischen) Koordinaten, die die Position im 3D Raum auf der x-, y- und z-Achse eines Koordinatensystems beschreiben und die 3 rotatorischen Parameter, die den Drehwinkel (Orientierung) um diese Achsen angeben, gegeben sein. Für die Umrechnungen von Koordinaten zwischen verschiedenen Koordinatensystem werden die translatorischen Parameter typischerweise als 3D-Vektor und die Orientierungsparameter als 3x3-Rotationsmatrix repräsentiert.

Mit dieser initialen Schätzung für die Transformation ^{C}T_{G} innerhalb der globalen Referenzkarte werden dann in dem darauffolgenden Verfahrensschritt 6 die detektierten Bodentexturübergänge aus dem Kamerabild auf die Bodenebene projiziert.

Es wird dann in Verfahrensschritt 7 die Abweichung zwischen den auf das Bodenniveau des Fahrzeugumfelds projizierten Bodentexturübergängen und Bodentexturübergängen in der globalen Referenzkarte berechnet und in Verfahrensschritt 8 mit einem vordefinierten Schwellwert für die erforderliche Güte der Übereinstimmung verglichen. Sollte dieser Schwellwert bereits unterschritten sein, so wird in Verfahrensschritt 10 die aktuelle 3D-Position und die Orientierung um die drei Raumachsen für weitere Verarbeitungsschritte, insbesondere für eine autonome Fahrfunktion, ausgegeben.

In den weitaus meisten Fällen wird die ursprüngliche Abbildung aber noch nicht exakt genug sein, um ein hierfür vordefiniertes Optimierungsmaß zu erfüllen. In diesen Fällen wird dann in einem iterativen Prozess für veränderte Transformationsparameter erneut die Projektion durchgeführt und die sich für diese korrigierte Projektion ergebende Abweichung berechnet, die dann wieder mit dem Schwellwert verglichen wird. Dieser Prozess wird iterativ fortgesetzt bis der Schwellwert unterschritten. Es wird hierbei also ausgehend von einer initialen Schätzung für die Transformation ^{C}T_{G}, entsprechend einer groben anfänglichen Lokalisierung und Kalibrierung, die Transformation ^{C}T_{G} korrigiert und so der Fehler für die aktuelle Position und Orientierung des Fahrzeugs minimiert.

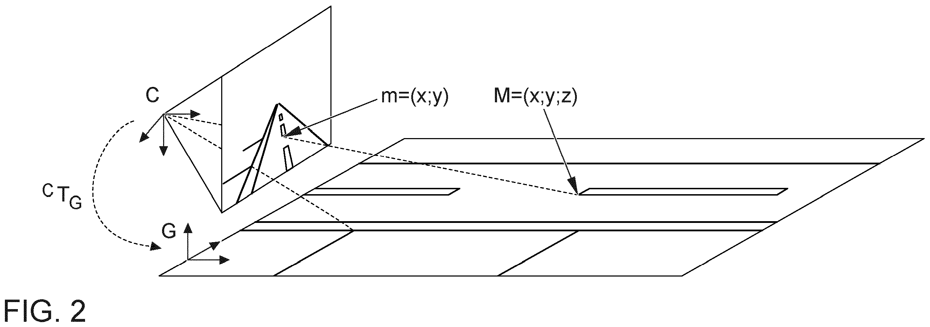

Die Projektion der Kamerapixel, die zu einem Bodentexturübergang gehören, ist in Figur 2 dargestellt. Bei bekannter Kamerapose, d.h. bekannter Transformation ^{C}T_{G} zwischen Kamerakoordinatensystem C und Bodenkoordinatensystem G ergibt sich die Projektion M des Kamerapixels m auf die Bodenebene als Schnittpunkt zwischen dem Sehstrahl der Kamera und der Bodenebene.

Es bestehen verschiedene Möglichkeiten, um den Übereinstimmungsfehler zu minimieren und um den besten Satz der Transformationsparameter zu ermitteln. So können, innerhalb bestimmter Grenzen, zufällige Parameterwerte gewählt werden und diese willkürlich im Rahmen der Iteration variiert werden und dann der Parametersatz mit dem kleinsten Fehler ausgegeben werden. Ebenso kann eine Kostenfunktion definiert und minimiert werden, beispielsweise durch Anwendung eines "Gradient descent" Optimierungsalgorithmus, der durch iterative Änderungen an den Parametern in Richtung eines Minimums der Kostenfunktion konvergiert.

Weiterhin kann auch durch ein künstliches neuronales Netzwerk die Transformation bzw. Homographie zwischen den erfassten und den aus einer kommentierten Referenzkarte entnommenen Bodentexturübergängen mit den geringsten Abweichungen berechnet werden.

Hierbei kann die Optimierung auch zunächst für jeden Übergangstyp einzeln vorgenommen werden und anschließend zusammengefasst werden.

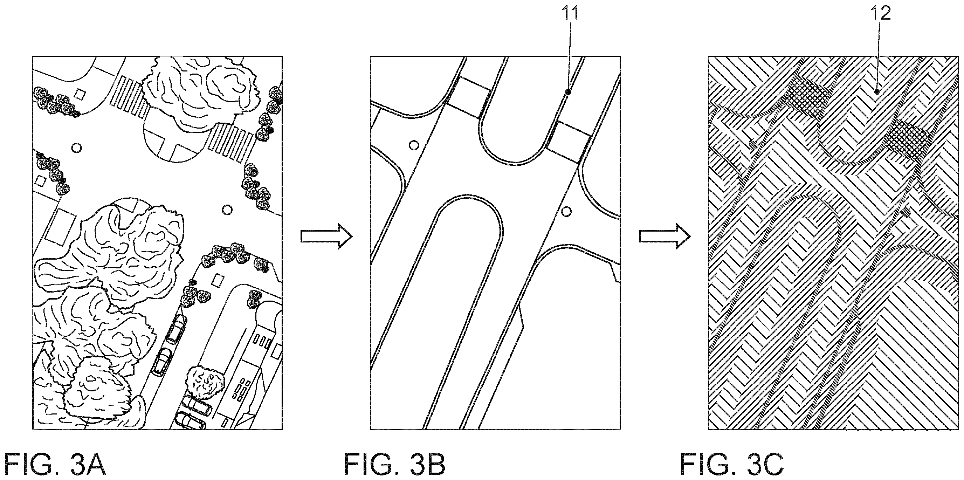

Als Optimierungsmaß kann beispielsweise die Abweichung der erfassten Bodentexturübergänge von einem Distanzfeld (englisch: "distance map") für den gerade befahrenen Straßenbereich ermittelt werden. Hierfür müssen vorab, beispielsweise von einem auf die Erzeugung von digitalen Karten spezialisierten Dienstleister, Referenzkarten in der Vogelperspektive erzeugt werden. An dem Beispiel eines Kreuzungsbereiches ist dieses in Figur 3 dargestellt.

Figur 3A zeigt zunächst schematisch eine Luftbildaufnahme des Kreuzungsbereiches. Für diese Luftbildaufnahme werden dann auf der Grundlage von vordefinierten Objektklassen, die der Bodenebene zugeordnet sind, Bodentexturübergänge ermittelt. Es erfolgt also eine Hervorhebung 11, gewissermaßen eine Beschriftung, der Bodentexturübergänge in der Luftbildaufnahme. Dieses ist in Figur 3B wiedergegeben.

Basierend darauf wird ein Distanzfeld 12 für den Kreuzungsbereich generiert, in der der Wert jedes Punktes den Abstand zum nächstgelegenen Bodentexturübergang wiedergibt. Dieses in Figur 3C dargestellt. Als Optimierungsmaß für die Abweichung der erfassten Bodentexturübergänge kann dann beispielsweise der durchschnittliche Abstand herangezogen und minimiert werden, der durch die Summe der Quadrate der Abstände gebildet werden kann.

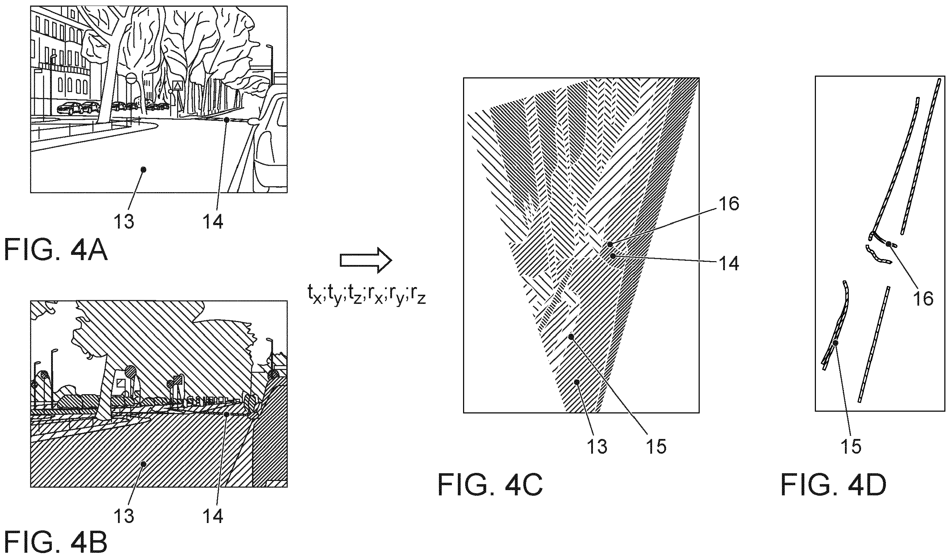

Diese in Figur 3 dargestellten, "offline" erzeugten Kartendaten werden dann mit den durch das Fahrzeug detektierten Bodentexturübergängen verglichen. Hierfür müssen diese zunächst aus dem mit einer Kamera des Fahrzeugs aufgenommenen Bild generiert werden. Dieses wird in Figur 4 wiederum am Beispiel des bereits vorher betrachteten Kreuzungsbereiches verdeutlicht.

In Figur 4A ist zunächst schematisch ein mit der Kamera aufgenommenes Bild des Kreuzungsbereiches gezeigt. Hierbei ist deutlich die vor dem Eigenfahrzeug liegende Fahrbahn13 mit einer in einiger Entfernung befindlichen Querstraße zu sehen. Links neben der Fahrbahn befinden sich Grünstreifen mit Bäumen, am rechten Fahrbahnrand geht der Asphalt in eine Pflasterung über. Auch ein vor dem Fahrzeug liegender Fußgängerüberweg 14, geparkte Fahrzeuge am Fahrbandrand, Fahrradfahrer und Straßenschilder sind zu erkennen.

Die Pixel dieses Bildes werden durch ein Semantisches Pixel Labeling nun mehreren unterschiedlichen Objektklassen zugeordnet, wie in Figur 4B dargestellt. So werden die Pixel im Bereich des befahrbaren Asphalts einer Objektklasse zugeordnet. Auf gleiche Weise werden die Pixel im Bereich der anderen in Figur 4A gezeigten Objekte entsprechenden Objektklassen zugeordnet. Auf diese Weise wird das mit der Kamera aufgenommene Bild in unterschiedliche Bereiche segmentiert, wobei zunächst noch alle definierten Objektklassen vorhanden sind.

Figur 4C zeigt zur Veranschaulichung für das segmentierte Bild aus Figur 4B schematisch eine Projektion auf die Bodenebene. Die verschiedenen Segmente der unterschiedlichen Objektklassen sind hier weiterhin zu erkennen. Eine solche, vollständige Projektion für alle Bildpunkte ist aber für die weitere Verarbeitung nicht erforderlich, da es für das erfindungsgemäße Verfahren nur auf die Bodentexturübergänge 15, 16 ankommt. Diese sind in Figur 4D dargestellt. Hierbei ist sowohl der Verlauf des linken und rechten Fahrbahnrands 15, als auch des Fußgängerüberwegs 16 deutlich zu erkennen.

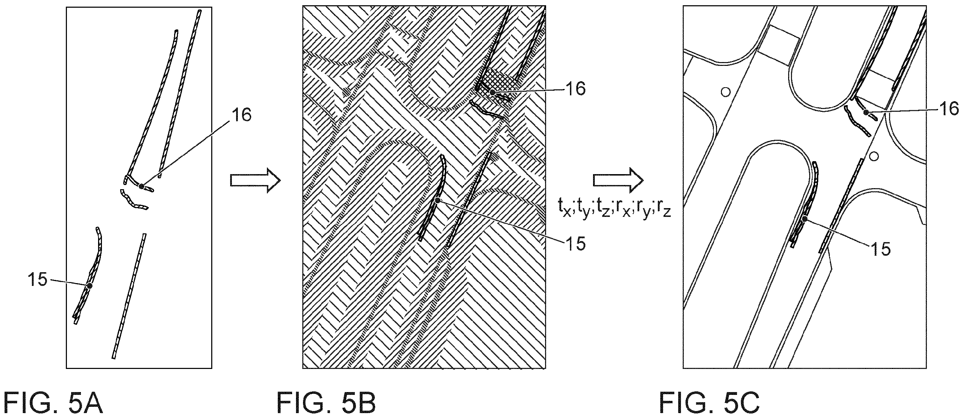

Figur 5A zeigt zunächst für das Beispiel aus Fig. 4 nochmals die sich aus der Projektion der klassifizierten Pixel auf die Bodenebene ergebenden Bodentexturübergänge 15, 16. Diese werden, wie in Figur 5B dargestellt, basierend auf einer Schätzung der Position und Orientierung des Fahrzeugs in das in Figur 3C gezeigte Distanzfeld für den betrachteten Kreuzungsbereich projiziert. Figur 5C zeigt eine entsprechende Projektion der Bodentexturübergänge auf die Referenzkarte. Im Rahmen einer iterativen Optimierung werden dann die Transformationsparameter tx, ty, tz, für eine Translation in den drei Raumkoordinaten und rx, ry, rz für eine Rotation um die drei Raumachsen solange angepasst bis die erforderliche Güte der Übereinstimmung erfüllt ist.

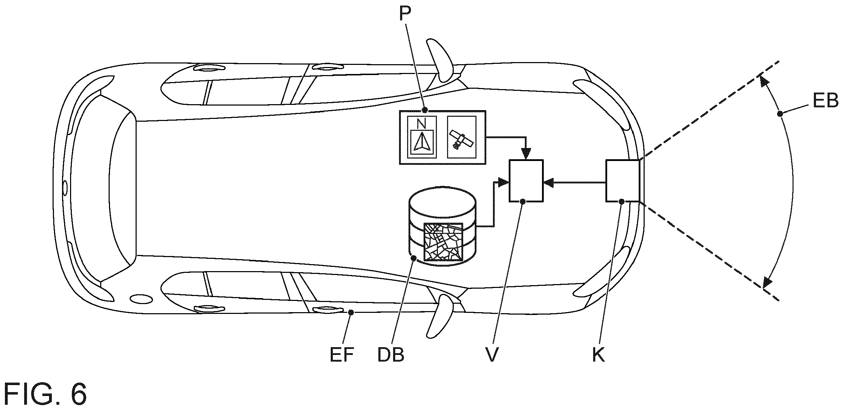

Figur 6 zeigt schematisch ein Eigenfahrzeug EF mit einer erfindungsgemäßen Vorrichtung. Das Kraftfahrzeug weist mindestens eine Kamera K zur Erfassung des vor dem Fahrzeug liegenden Fahrzeugumfelds auf. Die Kamera kann hierbei beispielsweise im Frontgrill verbaut sein, kann sich aber ebenso an anderen Verbaupositionen befinden, die eine ungestörte Erfassung des Fahrzeugumfelds ermöglichen. Auch können weitere Kameras und/oder anders geartete Sensoren wie Lidar-Sensoren oder Radarsensoren vorgesehen sein. Die Kamera weist als Frontkamera hierbei einen Erfassungsbereich EB des vor dem Kraftfahrzeug befindlichen Fahrzeugumfelds auf, der beispielsweise einen Bereich von 120° in der Horizontalen und 90° in der Horizontalen abdeckt. Hierbei ist die Kamera so angeordnet, dass das erfasste Bild zumindest teilweise Bereiche des Fahrzeugumfelds auf Bodenniveau, wie insbesondere die von dem Fahrzeug befahrene Straße, umfasst.

Von der Kamera werden pro Sekunde mehrere hochaufgelöste RGB-Bilder, beispielsweise mit einer Auflösung im Megapixelbereich, erzeugt und einer Verarbeitungseinheit V zugeführt. In dieser wird mittels eines neuronalen Netzwerks jedem Pixel des RGB-Bildes eine von mehreren Objektklassen zuordnet und die bereits erwähnte semantische Segmentierung erfolgt, um basierend darauf die Bodentexturübergänge in dem erfassten Bild zu detektieren, die auf das Bodenniveau projiziert werden.

Weiterhin ist eine Posenbestimmungseinheit P vorgesehen, welche die ungefähre aktuelle Fahrzeugposition aus GPS-Daten eines fahrzeuginternen GPS-Sensors und die ungefähre aktuelle Orientierung des Fahrzeugs mittels eines elektronischen Kompass ermittelt und eine Information hierüber ebenfalls der Verarbeitungseinheit V zuführt. Die Verarbeitungseinheit V ermittelt dann mittels dieser Information aus einer globalen Referenzkarte mit Bodentexturübergängen, die in der Datenbank DB vorliegt, einen Teilausschnitt für die weitere Verarbeitung. Die Datenbank DB kann hierbei insbesondere Teil einer Navigationseinheit sein.

Die Verarbeitungseinheit V führt dann ein Optimierungsverfahren durch, um die Abweichung zwischen den auf das Bodenniveau projizierten Bodentexturübergängen und den Bodentexturübergängen in dem Teilausschnitt der globalen Referenzkarte zu minimieren und basierend darauf die aktuelle Position und Orientierung des Fahrzeugs mit gegenüber der Schätzung deutlich verbesserten Genauigkeit zu ermitteln und für weitere Verarbeitungsschritte zu verwenden oder an nicht dargestellte weitere Verarbeitungs- und Ansteuereinheiten für eine autonome Fahrfunktion oder auch andere Fahrerassistenzfunktionen auszugeben.

Zusätzlich kann ein in der Figur nicht dargestellter 3D-Sensor, beispielsweise ein Lidarsensor, vorgesehen, der zusätzlich für die Pixel des mit der Kamera erfassten Bildes eine Höheninformation generiert, die dann zu einer weiteren Genauigkeitssteigerung verwendet werden kann.

Die Erfindung kann insbesondere für den Betrieb automatisch fahrender Kraftfahrzeuge eingesetzt werden. Weiterhin kann die Erfindung beispielsweise auch bei anderen fahrerlosen Transportsystemen oder mobilen Robotern verwendet werden. Die Erfindung ist, sofern nicht der in den Ansprüchen definierte Schutzbereich verlassen wird, nicht auf Landfahrzeuge beschränkt, sondern kann auch für Luft- und Wasserfahrzeuge verwendet werden.

### Bezugszeichenliste

- 1: Erfassung eines Bildes des Fahrzeugumfelds
- 2: Generierung Klassifizierungsinformation für die einzelnen Pixel
- 3: Semantische Segmentierung des Bildes
- 4: Detektion von Bodentexturübergängen
- 5: Bestimmung anfänglicher Transformationsparameter für geschätzte Pose
- 6: Projektion auf das Bodenniveau des Fahrzeugumfelds
- 7: Berechnung der Abweichung zwischen Projektion und Referenzkarte
- 8: Abfrage, ob Abweichung Schwellwert unterschreitet
- 9: Veränderung der Transformationsparameter
- 10: Ausgabe der aktuellen Position und Orientierung
- 11: Bodentexturübergänge für Luftbildaufnahme
- 12: Distanzfeld
- 13: vor dem Eigenfahrzeug liegende Fahrbahn
- 14: Fußgängerüberweg
- 15: Projizierte Bodentexturübergänge der Fahrbahn
- 16: Projizierte Bodentexturübergänge des Fußgängerüberwegs
- C: Kamerakoordinatensystem
- G: Bodenkoordinatensystem
- EF: Eigenfahrzeug
- BF: Bereich der Pixel der Objektklasse "Fußgänger"
- K: Kamera
- V: Verarbeitungseinheit
- EB: Erfassungsbereich
- DB: Datenbank
- P: Posenbestimmungseinheit

## Patentansprüche

1. Verfahren zur Bestimmung der geografischen Position und Orientierung eines Fahrzeugs, bei dem
- mit mindestens einer Kamera des Fahrzeugs ein Bild des Fahrzeugumfelds erfasst (1) wird, wobei das erfasste Bild zumindest teilweise Bereiche des Fahrzeugumfelds auf Bodenniveau umfasst;
- für die einzelnen Pixel des erfassten Bildes jeweils eine Klassifizierungsinformation generiert (2) wird, die eine Zuordnung zu einer von mehreren vorgegebenen Objektklassen angibt, und basierend auf dieser Zuordnung eine semantische Segmentierung des Bildes erfolgt (3);
- Bodentexturübergänge, also Übergänge zu anderen Objektklassen auf der Bodenebene, basierend auf der semantischen Segmentierung des Bildes detektiert (4) werden;
- nur die Pixel der detektierten Bodentexturübergänge auf das Bodenniveau des Fahrzeugumfelds projiziert (6) werden;
- die Abweichung zwischen den auf das Bodenniveau des Fahrzeugumfelds projizierten Bodentexturübergängen und Bodentexturübergängen in einer globalen Referenzkarte minimiert (7, 8, 9) wird; und
- basierend auf der minimierten Abweichung die aktuelle Position und Orientierung des Fahrzeugs im Raum ausgegeben (10) wird.

2. Verfahren nach Anspruch 1, wobei ausgehend von einer Schätzung der aktuellen Position und Orientierung des Fahrzeugs und/oder einer initialen Kalibrierung der mindestens einen Kamera anfängliche Transformationsparameter zwischen den detektierten Bodentexturübergängen und den Bodentexturübergängen für die geschätzte Position und Orientierung in der globalen Referenzkarte bestimmt (5) werden; basierend auf den Transformationsparametern die detektierten Bodentexturübergänge auf das Bodenniveau des Fahrzeugumfelds projiziert (56) werden; hierfür ein Optimierungsmaß für die Abweichung berechnet (7) wird und mit einem Schwellwert für eine akzeptable Abweichung verglichen (8) wird, die Transformationsparameter verändert (9) werden, falls der Schwellwert nicht unterschritten ist und dieser Prozess iterativ fortgesetzt wird bis der Schwellwert unterschritten wird.

3. Verfahren nach Anspruch 2, wobei basierend auf der Schätzung der aktuellen Position und Orientierung des Fahrzeugs und/oder der initialen Kalibrierung der mindestens einen Kamera ein Teilausschnitt aus der globalen Referenzkarte mit Bodentexturübergängen ausgewählt wird und die Abweichung zwischen den auf das Bodenniveau des Fahrzeugumfelds projizierten Bodentexturübergängen und Bodentexturübergängen in dem ausgewählten Teilausschnitt der globalen Referenzkarte minimiert (6, 7, 8) wird.

4. Verfahren nach Anspruch 3, wobei die Schätzung der aktuellen Position mittels Satellitennavigation und die Orientierung des Fahrzeugs mittels eines elektronischen Kompass ermittelt wird.

5. Verfahren nach Anspruch 3 oder 4, wobei die Schätzung der aktuellen Position und Orientierung des Fahrzeugs basierend auf einer bekannten vorherigen Position und Orientierung des Fahrzeugs mittels odometrischer Messverfahren ermittelt wird.

6. Verfahren nach einem der vorhergehenden Ansprüche, wobei die Bodentexturübergänge auf einer unterschiedlichen Beschaffenheit der Oberfläche von unterschiedlichen Bereichen des Fahrzeugumfelds auf Bodenniveau beruhen.

7. Verfahren nach einem der vorhergehenden Ansprüche, wobei die globale Referenzkarte aus der Vogelperspektive eine generalisierte Darstellung von Straßen und an die Straßen angrenzenden geografischen Details wiedergibt.

8. Verfahren nach Anspruch 7, wobei die generalisierte Darstellung in Form eines Distanzfeldes ausgestaltet ist, welches jeweils für einen Punkt der Referenzkarte einer ersten Objektklasse den Abstand zu dem nächstliegenden Punkt einer zweiten Objektklasse angibt.

9. Verfahren nach einem der vorhergehenden Ansprüche, wobei mehrere verschiedene Arten von Bodentexturübergängen je nach den Objektklassen der benachbarten Bereiche des Fahrzeugumfelds vorgesehen sind, für die verschiedenen Arten von Bodentexturübergängen jeweils separat die Abweichung zwischen den auf das Bodenniveau des Fahrzeugumfelds projizierten Bodentexturübergängen und Bodentexturübergängen in der globalen Referenzkarte minimiert (6) wird und die sich ergebenden Ergebnisse zur Ermittlung der Parameter für die aktuelle Position und Orientierung des Fahrzeugs zusammengeführt werden.

10. Verfahren nach einem der vorhergehenden Ansprüche, wobei im Bereich der Bodentexturübergänge zusätzlich für die Pixel des mit der mindestens einen Kamera erfassten Bildes eine Höheninformation sensorisch erfasst wird und für die einzelnen Punkte der globalen Referenzkarte ebenfalls Höheninformationen vorliegen und wobei die Pixel des erfassten Bildes und die Punkte der globalen Referenzkarte möglichst gut miteinander in Deckung gebracht werden.

11. Verfahren nach einem der vorhergehenden Ansprüche, wobei die Klassifizierungsinformation für die einzelnen Pixel mit einem künstlichen neuronalen Netzwerk generiert wird.

12. Vorrichtung zur Bestimmung der geografischen Position und Orientierung eines Fahrzeugs, mit mindestens einer Kamera (K) zur Erfassung eines Bildes vom Fahrzeugumfeld des Fahrzeugs, wobei die mindestens eine Kamera so in einem Fahrzeug anordbar ist, dass das erfasste Bild zumindest teilweise Bereiche des Fahrzeugumfelds auf Bodenniveau umfasst, und einer Verarbeitungseinheit (V), die
- für die einzelnen Pixel des erfassten Bildes jeweils eine Klassifizierungsinformation generiert, die eine Zuordnung zu einer von mehreren vorgegebenen Objektklassen angibt, und basierend auf dieser Zuordnung eine semantische Segmentierung des Bildes durchführt;
- Bodentexturübergänge, also Übergänge zu anderen Objektklassen auf der Bodenebene, basierend auf der semantischen Segmentierung des Bildes detektiert;
- nur die Pixel der detektierten Bodentexturübergänge auf das Bodenniveau des Fahrzeugumfelds projiziert;
- die Abweichung zwischen den auf das Bodenniveau des Fahrzeugumfelds projizierten Bodentexturübergängen und Bodentexturübergängen in einer globalen Referenzkarte minimiert; und
- basierend auf der minimierten Abweichung die aktuelle Position und Orientierung des Fahrzeugs im Raum ausgibt.

13. Vorrichtung nach Anspruch 12, wobei ein 3D-Sensor vorgesehen ist, der im Bereich der Bodentexturübergänge zusätzlich für die Pixel des mit der mindestens einen Kamera erfassten Bildes eine Höheninformation generiert.

14. Vorrichtung nach Anspruch 13, wobei der 3D-Sensor als Lidarsensor ausgestaltet ist.

15. Kraftfahrzeug, das für eine autonome oder teilautonome Fahrfunktion eingerichtet ist und Mittel zur Ausführung eines Verfahrens gemäß einem der Ansprüche 1 bis 11 umfasst oder eine Vorrichtung gemäß Anspruch 12, 13 oder 14 aufweist.

## Claims

1. Method for determining the geographical position and orientation of a vehicle, in which
- an image of the vehicle environment is captured (1) with at least one camera of the vehicle, wherein the captured image at least partially comprises regions of the vehicle environment at the ground level;
- an item of classification information is generated (2) for the individual pixels of the captured image, which item of classification information indicates an assignment to one of a plurality of predetermined object classes, and a semantic segmentation of the image is carried out (3) on the basis of this assignment; ground texture transitions, i.e., transitions to other object classes on the ground plane, are detected (4) on the basis of the semantic segmentation of the image;
- only the pixels of the detected ground texture transitions are projected (6) onto the ground level of the vehicle environment;
the deviation between the ground texture transitions projected onto the ground level of the vehicle environment and ground texture transitions in a global reference map is minimized (7, 8, 9); and
- the current position and orientation of the vehicle in space is output (10) on the basis of the minimized deviation.

2. Method according to claim 1, wherein, starting from an estimate of the current position and orientation of the vehicle and/or an initial calibration of the at least one camera, initial transformation parameters between the detected ground texture transitions and the ground texture transitions for the estimated position and orientation in the global reference map are determined (5); on the basis of the transformation parameters, the detected ground texture transitions are projected (56) onto the ground level of the vehicle environment; for this purpose an optimization measure for the deviation is calculated (7) and compared (8) to a threshold value for an acceptable deviation, the transformation parameters are changed (9) if the threshold value is not reached and this process is continued iteratively until the threshold value is reached.

3. Method according to claim 2, wherein a partial section from the global reference map with ground texture transitions is selected on the basis of the estimate of the current position and orientation of the vehicle and/or the initial calibration of the at least one camera, and the deviation between the ground texture transitions projected onto the ground level of the vehicle environment and ground texture transitions in the selected partial section of the global reference map is minimized (6, 7, 8).

4. Method according to claim 3, wherein the estimate of the current position is determined by means of satellite navigation and the orientation of the vehicle by means of an electronic compass.

5. Method according to either claim 3 or claim 4, wherein the estimate of the current position and orientation of the vehicle is determined on the basis of on a known previous position and orientation of the vehicle by means of odometric measurement methods.

6. Method according to any of the preceding claims, wherein the ground texture transitions are based on a different condition of the surface of different regions of the vehicle environment at ground level.

7. Method according to any of the preceding claims, wherein the global reference map represents a generalized representation of roads and geographical details adjacent to the roads from a bird's eye view.

8. Method according to claim 7, wherein the generalized representation is configured in the form of a distance field which indicates the distance to the closest point of a second object class for each point of the reference map of a first object class.

9. Method according to any of the preceding claims, wherein a plurality of different types of ground texture transitions are provided depending on the object classes of the adjacent regions of the vehicle environment, the deviation between the ground texture transitions projected onto the ground level of the vehicle environment and ground texture transitions in the global reference map is minimized (6) separately for the different types of ground texture transitions, and the results obtained are combined in order to determine the parameters for the current position and orientation of the vehicle.

10. Method according to any of the preceding claims, wherein an item of height information is detected by sensors in the region of the ground texture transitions additionally for the pixels of the image captured with the at least one camera and height information is also present for the individual points of the global reference map and wherein the pixels of the captured image and the points of the global reference map are aligned with one another as well as possible.

11. Method according to any of the preceding claims, wherein the item of classification information for the individual pixels is generated with an artificial neural network.

12. Device for determining the geographical position and orientation of a vehicle, comprising at least one camera (K) for capturing an image of the vehicle environment of the vehicle, wherein the at least one camera can be arranged in a vehicle such that the captured image at least partially comprises regions of the vehicle environment at ground level, and a processing unit (V) that
- in each case generates an item of classification information for the individual pixels of the captured image, which item of classification information indicates an assignment to one of a plurality of predetermined object classes and performs a semantic segmentation of the image on the basis of this assignment;
- detects ground texture transitions, i.e., transitions to other object classes on the ground plane, on the basis of the semantic segmentation of the image;
- projects only the pixels of the detected ground texture transitions onto the ground level of the vehicle environment;
minimizes the deviation between the ground texture transitions projected onto the ground level of the vehicle environment and ground texture transitions in a global reference map; and
- outputs the current position and orientation of the vehicle in space on the basis of the minimized deviation.

13. Device according to claim 12, wherein a 3D sensor is provided, which generates an item of height information in the region of the ground texture transitions additionally for the pixels of the image captured with the at least one camera.

14. Device according to claim 13, wherein the 3D sensor is configured as a lidar sensor.

15. Motor vehicle configured for an autonomous or semi-autonomous driving function and means for carrying out a method according to any of claims 1 to 11 or comprising a device according to claims 12, 13 or 14.

## Revendications

1. Procédé de détermination de la position géographique et de l'orientation d'un véhicule, dans lequel
- une image de l'environnement du véhicule est détectée (1) au moyen d'au moins une caméra du véhicule, l'image détectée comprenant au moins partiellement des zones de l'environnement de véhicule au niveau du sol ;
- une information de classification est générée (2) pour les pixels individuels de l'image détectée, respectivement, laquelle information indique une attribution à une ou plusieurs classes d'objets prédéfinies et, sur la base de cette attribution, une segmentation sémantique de l'image est effectuée (3) ; des transitions de texture de sol, à savoir des transitions vers d'autres classes d'objets au niveau du sol, sont détectées (4) sur la base de la segmentation sémantique de l'image ;
- seuls les pixels des transitions de texture de sol détectées au niveau du sol de l'environnement de véhicule sont projetés (6) ;
l'écart entre les transitions de texture de sol projetées au niveau du sol de l'environnement de véhicule et les transitions de texture de sol dans une carte de référence globale est réduit au minimum (7, 8, 9) ; et
- sur la base de l'écart réduit au minimum, la position et l'orientation réelles du véhicule dans l'espace sont émises (10).

2. Procédé selon la revendication 1, dans lequel, sur la base d'une estimation de la position et de l'orientation réelles du véhicule et/ou d'un étalonnage initial de l'au moins une caméra, des paramètres de transformation initiaux entre les transitions de texte de sol détectées et les transitions de texte de sol pour la position et l'orientation estimées sont déterminés (5) dans la carte de référence globale ; sur la base des paramètres de transformation, les transitions de texture de sol détectées sont projetées (56) sur le niveau du sol de l'environnement de véhicule ; à cette fin, une mesure d'optimisation est calculée (7) pour obtenir l'écart et comparée (8) à une valeur seuil pour obtenir un écart acceptable, les paramètres de transformation sont modifiés (9) dans le cas où on ne passe pas sous la valeur seuil et ce processus est poursuivi de manière itérative jusqu'à passer en dessous de la valeur seuil.

3. Procédé selon la revendication 2, dans lequel, sur la base de l'estimation de la position et de l'orientation réelles du véhicule et/ou de l'étalonnage initial de l'au moins une caméra, une section partielle de la carte de référence globale avec des transitions de texture de sol est choisie et l'écart entre les transitions de texture de sol projetées au niveau du sol de l'environnement de véhicule et les transitions de texture de sol dans la section partielle choisie de la carte de référence globale est réduit au minimum (6, 7, 8).

4. Procédé selon la revendication 3, dans lequel l'estimation de la position réelle est déterminée à l'aide d'une navigation par satellite et l'orientation du véhicule est déterminée à l'aide d'un compas électronique.

5. Procédé selon la revendication 3 ou 4, dans lequel l'estimation de la position et de l'orientation réelles du véhicule est déterminée sur la base d'une position et d'une orientation précédentes connues du véhicule à l'aide d'un procédé de mesure odométrique.

6. Procédé selon l'une quelconque des revendications précédentes, dans lequel les transitions de texture de sol reposent sur une consistance différente de la surface de zones différentes de l'environnement de véhicule au niveau du sol.

7. Procédé selon l'une quelconque des revendications précédentes, dans lequel la carte de référence globale, vue depuis le ciel, reflète une représentation généralisée de rues et de détails géographiques adjacents aux rues.

8. Procédé selon la revendication 7, dans lequel la représentation généralisée est conçue sous la forme d'un champ de distance qui indique, respectivement pour un point de la carte de référence d'une première classe d'objets, la distance jusqu'au point le plus proche d'une seconde classe d'objets.

9. Procédé selon l'une quelconque des revendications précédentes, dans lequel plusieurs types différents de transitions de texture de sol sont prévues selon les classes d'objets des zones voisines de l'environnement de véhicule, pour les différents types de transitions de texture de sol respectivement, l'écart entre les transitions de texture de sol projetées au niveau du sol de l'environnement de véhicule et les transitions de texture de sol dans la carte de référence globale est respectivement réduit au minimum (6) séparément et les résultats qui en découlent sont fusionnés pour la détermination des paramètres pour la position et l'orientation réelles du véhicule.

10. Procédé selon l'une quelconque des revendications précédentes, dans lequel, dans la zone des transitions de texture de sol, une information de hauteur est en outre détectée par capteur pour les pixels de l'image détectée avec l'au moins une caméra et des informations de hauteur sont également disponibles pour les points individuels de la carte de référence globale, et dans lequel les pixels de l'image détectée et les points de la carte de référence globale sont amenés en coïncidence les uns avec les autres le mieux possible.

11. Procédé selon l'une quelconque des revendications précédentes, dans lequel l'information de classification pour les pixels individuels est générée au moyen d'un réseau neuronal artificiel.

12. Dispositif de détermination de la position géographique et de l'orientation d'un véhicule, comportant au moins une caméra (K) pour la détection d'une image de l'environnement de véhicule du véhicule, l'au moins une caméra pouvant être agencée dans un véhicule de telle sorte que l'image détectée comprend au moins partiellement des zones de l'environnement de véhicule au niveau du sol et une unité de traitement (V) qui,
- pour les pixels individuels de l'image détectée, génère respectivement une information de classification qui indique une attribution à une ou plusieurs classes d'objets prédéfinies et, sur la base de cette attribution, réalise une segmentation sémantique de l'image ;
- détecte des transitions de texture de sol, à savoir des transitions vers d'autres classes d'objets au niveau du sol, sur la base de la segmentation sémantique de l'image ;
- projette uniquement les pixels des transitions de texture de sol détectées au niveau du sol de l'environnement de véhicule ;
réduit au minimum l'écart entre les transitions de texture de sol projetées au niveau du sol de l'environnement de véhicule et les transitions de texture de sol dans une carte de référence globale ; et
- sur la base de l'écart réduit au minimum, émet la position et l'orientation réelles du véhicule dans l'espace.

13. Dispositif selon la revendication 12, dans lequel un capteur 3D est prévu, lequel génère en outre, dans la zone des transitions de texture de sol, une information de hauteur pour les pixels de l'image détectée au moyen de l'au moins une caméra.

14. Dispositif selon la revendication 13, dans lequel le capteur 3D est conçu sous la forme de capteur lidar.

15. Véhicule automobile conçu pour une fonction de conduite autonome ou partiellement autonome et comprend des moyens pour la réalisation d'un procédé selon l'une des revendications 1 à 11 ou présente un dispositif selon la revendication 12, 13 ou 14.
